# EUROPEAN PATENT APPLICATION

(11) **EP 1 146 623 A1**
(43) Date of publication of application: **17.10.2001**
(21) Application number: 00913191.3
(22) Date of filing: 13.03.2000
(51) Int. Cl.: H02J 13/00

(54) **METHOD FOR PRODUCING TIME-ALTERNATING ELECTRICITY**

(30) Priority: 11.03.1999 RU 99104999
(71) Applicant: Obschestvo S Ogranichennoi Otvetstvennostiju "Demp Bek", Moscow, 123557 (RU)
(72) Inventor: MAXIMCHENKO, Vladimir Alexeevich, Moskovskaya obl., 143400 (RU); GVOZDEV, Igor Evgenievich, Moskovskaya obl. 141080 (RU); ALIEV, Nariman Oktai-ogly, Moskovskaya obl., 141700 (RU)
(74) Representative: Held, Stephan, Dr.rer.nat., Dipl.-Chem.
(86) International application number: RU0000080
(87) International publication number: WO0054389

(57) **Abstract**

The invention relates to power production and electric communication and is useful in identifying the produced, transmitted and consumed electricity. The object of the invention is to improve the reliability of determining the source of electricity, its consumer, and the section of the electrical circuit and the power transmission line over which the electricity is supplied from the source to the consumer. The object is attained by introducing into electricity, during and/or after generating electromotive force, an identifier of a source or a consumer of the electricity, or at least one of power transmission lines, or at least one of distributors of the electricity. The identifier, such as unidirectional and/or bidirectional pulses and their various combinations, or temporary mismatch of voltage and current, may be introduced into the first frequency harmonic, one of higher or lower harmonics of voltage or current.

## Description

### Field of the Invention

The present invention relates to power production and electric communication and is useful in identifying the produced electricity.

### Background of the Invention

As of now, identification of the produced product has gained wide acceptance in various fields of national economy.

Within the scope of this invention, "identification" refers to determining the compliance of both a batch of objects and a single object (product) with its unique identification mark. The identification can be effected by applying an identifier (a mark) on a product or by introducing an identifier into the product, e.g. by introducing an information signal into electricity to identify the producer of the electricity or the power transmission line over which the electricity has been supplied from the producer to the consumer.

The term "identification" is used in this meaning throughout the description, including the claims.

Great use is made of the product identification by labels containing bar, symbolic, numeric and alphabetic codes, and by identity transmitters configured as oscillating LC loops. A code combination of letters, digits, and a tuning frequency of the LC loop represent the identifier which uniquely defines the object.

The aforementioned identifiers and methods of their application on objects are described in the specifications to RU patents Nos. 2045780, 2074696, 2102246, 2106689, 2112958, and in the description to RU certificate for utility model No.0006461.

However, the above identifiers and methods are unsuitable for identifying the produced, transmitted, distributed and consumed electricity in view of the peculiarity of the latter as a product.

Within the scope of this description, "electricity" refers to a combination of phenomena which exhibit existence, motion and interaction of charged particles (through electromagnetic field). As a variant, electricity can refer to electric power [3,4]. The term "electricity" is used in this meaning throughout the description, including the claims.

A conventional method for producing electricity with a varying voltage is taught in the description to SU Inventor's Certificate No.390626 for a method for remote control of a power plant switching unit, which involves providing a code series for removing voltage from a power transmission line. The prior method provides remote disconnection of electric plants in emergencies and abnormal situations and may be interpreted as a method for identifying a failure in a power transmission line.

The prior method, however, is not very reliable in determining the source, distributor and consumer of electricity, as well as the section of the electrical circuit and the power transmission line over which the electricity is supplied from the producer to the consumer in the electrical power system.

Within the scope of this invention, "electrical power system" refers to a combination of sources of electricity, e.g. power stations, which are connected by power transmission lines and jointly supply electric power to consumers [1].

The term "electrical power system" is used in this meaning throughout the description.

"Source of electricity" refers to a plant which produces electric power. Depending on the energy source, there are distinguished thermal power stations (steam power plants, gas-turbine power plants, nuclear power plants, etc.), hydropower stations, solar power stations, geothermal power stations, tidal and wind-mill electric generating plants, chemical cells, etc.

The term "source of electricity" is used in this meaning throughout the description.

The description to SU Inventor's Certificate No.547917 for a method for controlling distributed objects connected to a public supply network discloses a method for producing electricity with a varying voltage, which involves generating a short-duration circular control signal in the form of unidirectional pulses, the repetition rate of which coincides with the supply frequency.

The prior method provides remote circular control of distributed objects over power transmission lines in emergencies and abnormal situations and may be interpreted as a method for identifying a failure or defaulting operations at the power transmission line or the controlled object.

The prior art, however, is not very reliable in determining the source, distributor and consumer of electricity, as well as the section of the electrical circuit and the power transmission line over which the electricity is supplied from the producer to the consumer in the electrical power system.

Also known is a method for transmitting a broadcast information over a communication channel, disclosed in RU application No.94033147 for a method for transmitting a broadcast information, published 20.02.98, which involves grouping the information in a series of information elements and transmitting the same into the communication channel.

The prior method provides the transmission of information both to stationary and mobile stations over one or more communication channels, and may be interpreted as a method for identifying an information transmitter and receiver.

However, in case of using the prior method in power transmission lines, the method is not very reliable in determining the source, distributor and consumer of electricity, as well as the section of the electrical circuit and the power transmission line over which the electricity is transmitted from the producer to the consumer in the electrical power system.

The method which most closely approaches the present invention in terms of its technical matter (hereinafter referred to as the prototype) is a method for producing a time-varying electricity, including generating electromotive force, disclosed in the description to SU Inventor's Certificate No.758387 for a method for controlling distributed objects over wires of a power transmission line, which involves generating a control signal (information signal) in the form of pulses with a repetition rate coinciding with the supply frequency, the pulses imparting asymmetry to the sine wave of the supply voltage relative to the time axis.

Within the scope of this invention, "information signal" refers to a physical process (or phenomenon) which carries a message (information) of an event, state or characteristic of a monitored object, or transmits control commands, instructions, warnings, etc. The information signal may be, for instance, a voltage pulse or a series of voltage pulses having a certain waveform on one of frequency harmonics, or one complete highfrequency harmonic from those constituting the voltage.

The term "information signal" is used in this meaning throughout the description.

The above prototype provides remote control of distributed objects over the power transmission lines in emergencies and abnormal situations.

The prototype, however, is not very reliable in determining the source, distributor and consumer of electricity, as well as the section of the electrical circuit and the power transmission line over which the electricity is supplied from the producer to the consumer in the electrical power system.

### Summary of the Invention

The object of the invention is to improve reliability of determining the source (power station), the consumer of electricity, the section of the electrical circuit and the power transmission line over which the electricity is supplied from the source to the consumer in the electrical power system, as well as the distributor of electricity (distributing unit) among consumers or networks.

The object of the invention can be attained by a method for producing a time-varying electricity, including generating electromotive force, wherein in accordance with the invention, the method further includes introducing into the electricity, during and/or after said generating of electromotive force, an identifier of a source and/or a consumer of the electricity, and/or at least one of power transmission lines, and/or at least one of distributors of the electricity.

This provides identification of electricity as a product.

The method for producing a time-varying electricity with an identifier may include supplementing the electricity with at least one frequency harmonic of alternating voltage and/or current, said frequency harmonic being the identifier. This will enhance the reliability of determining the source of electricity.

Within the scope of this invention, "harmonic" refers to a value varying periodically with a certain frequency in time, for instance, voltage (voltage frequency harmonic). The harmonic with the frequency equal to the frequency of a nonsinusoidal periodic value is the first harmonic. The remaining harmonics with a frequency which is, for instance, 2, 3, 4, and so forth, times greater than the frequency of the first harmonic are higher harmonics, and vice versa, the harmonics with a frequency which is lower than that of the first harmonic are lower harmonics [2].

The term "harmonic" is used in this meaning throughout the description, including the claims.

The method for producing electricity with an identifier may include introducing the identifier into the first frequency harmonic of voltage and/or current, or at least into one of the higher frequency harmonics of voltage and/or current, or at least into one of the lower frequency harmonics of voltage and/or current. This improves the efficiency of detecting the identifier and the reliability of determining the source of electricity.

The method for producing electricity with an identifier may include introducing the identifier into the first frequency harmonic and at least into one of the lower frequency harmonics of voltage and/or current. This will enhance robustness of the identifier.

The method for producing electricity with an identifier may include introducing the identifier into the first frequency harmonic and at least into one of the higher frequency harmonics of voltage and/or current. This will enhance robustness of the identifier.

The method for producing electricity with an identifier may include using, as the identifier, a unidirectional and/or bidirectional pulse or a combination of unidirectional and/or bidirectional pulses, and a periodic and/or aperiodic sequence of unidirectional pulses. This will improve the reliability of determining the source of electricity, and the section of the electrical circuit or the power transmission line.

The method for producing electricity with an identifier may include using, as the identifier, pulses with a waveform selected from the group containing fragments of a polygon, a conic section of a right circular cone. This will improve the reliability of determining the source of electricity, and the section of the electrical circuit or the power transmission line.

Within the scope of this invention, "conic section" refers to a line formed by a surface of a right circular cone and a secant plane which does not pass through the cone vertex.

The term "conic section" is used in this meaning throughout the description, including the claims.

The method for producing electricity with an identifier may include using, as the identifier, a temporary mismatch of voltage and current. This will improve the reliability of determining the consumer of electricity and the section of the electrical circuit or the power transmission line.

Analysis of the background art has shown that the combination of technical features recited in the claims is unknown. Thus, it can be concluded that the invention observes the novelty condition.

To check the compliance of the present invention with the inventive step condition, the additional search has been carried out in order to find prior technical solutions comprising the features which coincide with the features of the invention distinguishing the same from the prototype. It has been established that the present invention does not appear to be obvious from the state of the art. Consequently, the present invention observes the inventive step condition.

### Detailed Description of Preferred Embodiments

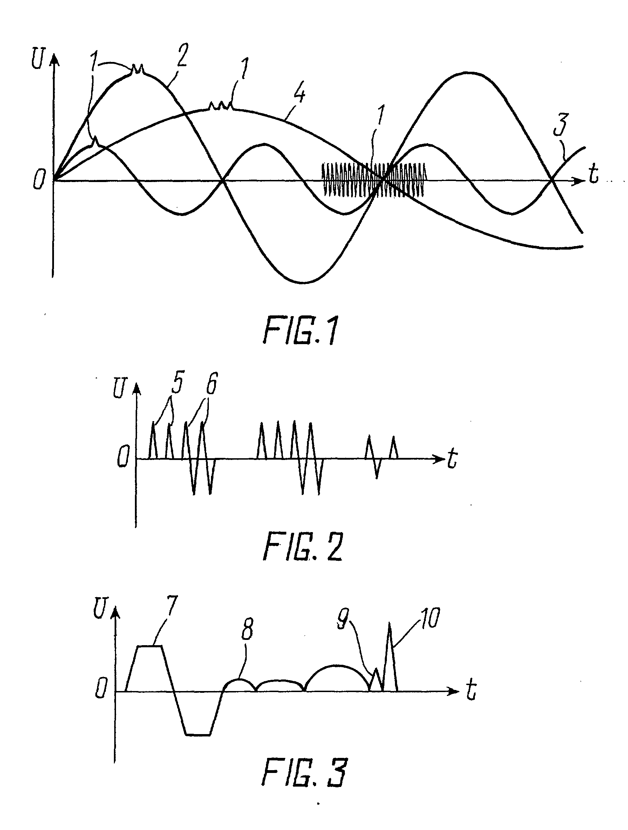

A method for producing electricity with an identifier in accordance with the present invention and its embodiments will be further explained with reference to the accompanying drawings in which Fig.1 shows the first 2, higher 3 and lower 4 frequency components of alternating voltage U. Identifier 1 is introduced into the first, higher and lower frequency harmonics and, further, the identifier 1 is a harmonic of a more higher order than the harmonic 3.

Fig.2 shows identifiers in the shape of a combination of unidirectional 5 and bidirectional 6 pulses.

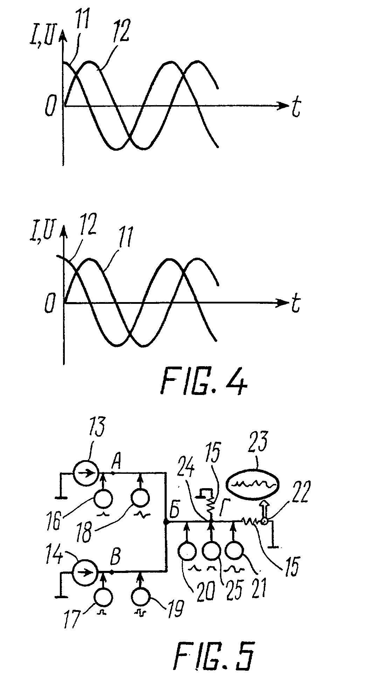

Fig.3 shows pulses in the shape of a polygon part 7 (bipolar trapezoidal pulse), a circle part 8, and triangular unidirectional pulses 9 and 10 with different amplitude.

Fig.4 shows an identifier implemented as a temporary mismatch of current 11 and voltage 12.

Fig.5 is a schematic diagram illustrating implementation of a method for producing and identifying electricity which is produced by sources 13 and 14 of electricity and consumed by a load (consumer) 15. The sources of electricity are connected with the consumer through power transmission lines having sections A-B, C-B and B-D. The electricity sources 13 and 14 comprise generators 16 and 17 for introducing identification pulses or harmonics. The power transmission lines comprise identification pulse generators 18, 19, 20. An electricity distributor 24 comprises an identification pulse generator 25. The load 15 has an identification pulse generator 21. A device 22 for receiving identification features of the sources and power transmission lines is located downstream of the load. From decryption of obtained information 23, the consumer gets data informing whose electricity is consumed and over which power transmission lines the electricity is supplied.

Feasibility of the present invention is proved by information of analogous methods and apparatuses for implementing the method, disclosed in the specifications to the following SU inventions:
an apparatus for providing a remote signal to switch a sectionalizing device (SU Inventor's Certificate No.352352);
a method for generating an ac circuit switching command (SU Inventor's Certificate No.433558);
an apparatus for communication among electrical networks (SU Inventor's Certificate No.542295);
a method for transmitting movable object remote control commands (SU Inventor's Certificate No.801190);
an apparatus for remote signaling (SU Inventor's Certificate No.811502), and
in the description to RU patent application for a method for transmitting broadcast information (Application No. 94033147, 20.02. 1988) and the description to RU patent for an apparatus for identifying and counting casting blocks in a convergent process flow (RU patent No.2101764).

Furthermore, the generators of electricity identification features (e.g. microwave generators) will be compact as the power of such a generator is many times smaller than that of the pulses [3]. By way of example, with the pulse having the duration of 10µc, power of 100 kW and repetition rate of 200 Hz, a power of the generator will not exceed 200 W.

### References cited:

1.Postnikov N.P., Rubashov G.M. Power Supply of Industrial Enterprises: Manual for technical colleges. L. Leningrad Division, 1980, 376 pages.
2.Popov V.S. Theoretical Electrical Engineering. Manual for technical colleges. 3^{rd} edition, suppl. and amend., M. Energoizdat, 1990, 554 pages.
3.Zherebtsov I.P. Fundamentals of Electrical Engineering, 5^{th} edition, suppl. and amend. L., Energoizdat, Leningrad Division, 1989, 352 pages.
4. Sovetskii entsiklopedicheskii slovar (Soviet Encyclopedic Dictionary), M.: Sov.Entsiklopediya, 1981, 1554 pages.

## Claims

1. A method for producing a time-varying electricity, including generating electromotive force, ***characterized in that*** the method further includes introducing into the electricity, during and/or after said generating of electromotive force, an identifier of at least one of sources of the electricity, or at least one of consumers of the electricity, or at least one of power transmission lines, or at least one of distributors of the electricity.

2. The method according to claim 1 wherein said identifier is introduced into the first frequency harmonic of voltage and/or current.

3. The method according to claim 1 wherein said identifier is introduced into at least one of higher frequency harmonics of voltage and/or current.

4. The method according to claim 1 wherein said identifier is introduced into at least one of lower frequency harmonics of voltage and/or current

5. The method according to any one of claims 1, 2 and 4 wherein said identifier is introduced into the first frequency harmonic and at least one of lower frequency harmonics of voltage and/or current.

6. The method according to any one of claims 1 to 3 wherein said identifier is introduced into the first frequency harmonic and at least one of higher frequency harmonics of voltage and/or current.

7. The method according to any one of claims 1 to 6 wherein said identifier is a unidirectional and/or bidirectional pulse.

8. The method according to any one of claims 1 to 7 wherein said identifier is a combination of unidirectional and/or bidirectional pulses.

9. The method according to any one of claims 1 to 8 wherein said identifier is a periodic and/or aperiodic sequence of unidirectional and/or bidirectional pulses.

10. The method according to any one of claims 7 to 9 wherein a waveform of the pulses is selected from the group containing fragments of a polygon, a conic section of a right circular cone.

11. The method according to any one of claims 1 to 6 wherein said identifier is a temporary mismatch of voltage and current introduced into the electricity.

12. The method according any one of claims 1 to 6 wherein said identifier is at least one of frequency harmonics of alternating voltage and/or current.
